# EUROPEAN PATENT SPECIFICATION

(11) **EP 3 441 627 B1**
(45) Date of publication and mention of the grant of the patent: **20.11.2019**
(21) Application number: 18188009.7
(22) Date of filing: 08.08.2018
(51) Int. Cl.: F16B 5/06

(54) **FASTENING ELEMENT AND SYSTEM WITH A FASTENING ELEMENT**
BEFESTIGUNGSELEMENT UND SYSTEM MIT EINEM BEFESTIGUNGSELEMENT
ÉLÉMENT DE FIXATION ET SYSTÈME AVEC UN ÉLÉMENT DE FIXATION

(30) Priority: 11.08.2017 EP 17185996
(43) Date of publication of application: 13.02.2019
(73) Proprietor: Newfrey LLC, New Britain, CT 06053 (US)
(72) Inventor: Burgsmüller, Henrik, 35394 Gießen (DE); Stau, Bastian, 35394 Gießen (DE)
(74) Representative: SBD IPAdmin

(56) References cited:
- DD-A1- 127 644
- DE-A1- 3 427 641

## Description

### FIELD OF THE INVENTION

The present invention relates to a fastening element for the attachment of an actuator to the front flap of a vehicle.

The present invention is also directed to a system with a first component provided with a stud and a second component provided with a fastening element, wherein the stud is received within a recess of the fastening element.

### BACKGROUND OF THE INVENTION

It is known from the state of the art to provide fastening elements with a recess, in which a bolt (or more precisely the shaft of a bolt) is inserted, such fastening elements being able to retain the bolt. In the automobile industry, for example, such elements are used either to assemble together two components of a vehicle, such as, but not limited to, vehicle panels, flaps, engine flaps, actuators, drive elements, hinged elements.

One objective of the present invention is to provide a fastening element easy to manufacture and to mount, with low mounting forces and high holding forces. It is also an object of the invention to provide a fastening element allowing a "soft" attachment able to absorb shocks received by the system, in order to improve the stability and the service life of such systems.

### SUMMARY OF THE INVENTION

To this aim, according to the invention, it is provided a fastening element for the attachment of an actuator to the front flap of a vehicle having:
- a housing comprising a recess extending along a longitudinal axis and adapted to receive a stud, and a slit extending radially from the recess, and
- a clamp adapted to cooperate with the slit, wherein the clamp partially covers the recess,
wherein the clamp comprises a first portion extending in a first plane, the first portion being adapted to be inserted in the slit and a second portion extending in a second plane, the second portion being adapted to stay outside of the slit, wherein the second portion extends sensibly orthogonal from the first portion, and wherein the first portion comprises an aperture axially opened and adapted to receive a stud.

The fastening element is in two different parts (namely the clamp and the housing) and is easy to manufacture. The two different parts allow an easy assembly with low mounting forces and high holding forces. The fastening element is adapted to allow a "soft" attachment able to absorb shocks received.

According to an embodiment, the housing is a one-piece component, the clamp is a one-piece component, and both are made of different material. This allows to notably reduce the weight of the fastening element without reducing the holding forces needed.

According to an embodiment, the first portion of the clamp comprises an opening, the housing comprises a protrusion, and the protrusion is adapted to extend in the opening. Thus, the clamp and the housing can securely cooperate together. The opening-protrusion arrangement form a locking system.

According to an embodiment, the opening is provided on the first portion and extends between the second portion and the aperture.

According to an embodiment, the clamp is movable with regard to the housing between a free position, in which the protrusion does not cooperate with the opening and a clamped position, in which the protrusion cooperates with the opening.

According to an embodiment, the aperture and the opening are distant from each other from at least 2 millimetres.

According to an embodiment, the first portion of the clamp comprises two curved free ends. The two curved free ends allow a better guiding of the clamp in the slit. The clamp is translated along the slit until the opening and the protrusion cooperate together.

According to an embodiment, the axially opened aperture is provided between the two curved free ends.

According to an embodiment, the slit of the housing is formed by two tracks. The tracks guide the clamp when it is inserted in the housing.

According to an embodiment, the two tracks each have a first segment, a second segment and an interface segment extending between the first and second segments.

According to an embodiment, the first segments extend parallel from each other. According to an embodiment, the interface segments are curved and cooperate with the free curved ends.

According to an embodiment, the clamp is made with a metallic material. According to an embodiment, the housing is made with a plastic material, for example a thermoplastic.

Another object of the present invention is a system for the attachment of an actuator to the front flap of a vehicle, comprising a first component provided with a stud having a shaft and a head, and a second component provided with the fastening element as described above, wherein the shaft is received within the recess, and wherein the stud cooperates with the clamp and the clamp retains the head of the stud.

The bolt mounting forces within the recess are low, whereas the demounting forces stay high, in order to avoid any unintended disassembly of first and second components. During a crash, the fastening element guides the bolt, in such way that a deformation of the bolt in a radial direction is avoided. More particularly, such system mounted within a vehicle, allows avoiding any unintended disassembly of first and second components in case of a crash. Thus, the fastening element can be used to fasten the actuator of a front flap of a vehicle.

### BRIEF DESCRIPTION OF THE DRAWINGS

Other characteristics and advantages of the invention will readily appear from the following description of embodiments, provided as non-limitative examples, in reference to the accompanying drawings.

In the drawings:
Fig. 1 is a view of a stud and a fastening element according to the invention with a clamp and a housing, the housing, half of the housing being visible.
Fig. 2 is a side view of the fastening element of Fig. 1 with the clamp seated in a slit of the housing and the stud.

On the different figures, the same reference signs designate identical or similar elements.

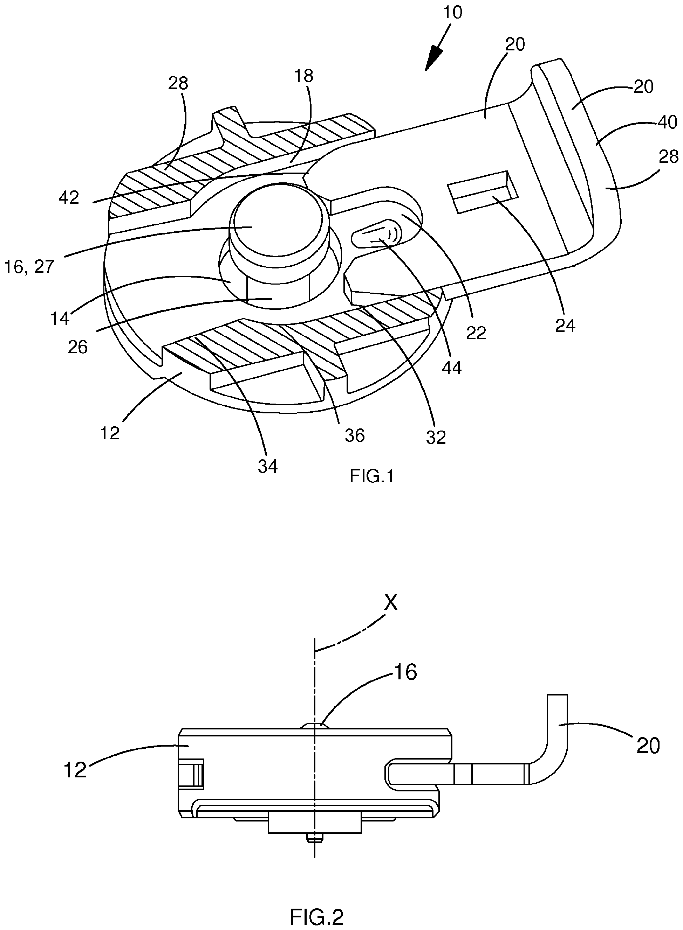

The fastening element 10, as depicted in Fig. 1 and Fig. 2, comprises a housing 12 and a clamp 20. The housing 12 and the clamp 20 are designed to cooperate together such that the clamp 20 can retain and surround a stud 16 extending in a recess 14 of the housing 12.

The housing 12 comprises the recess 14 which extends along a longitudinal axis X. The recess 14, as illustrated in Fig. 1, is adapted to receive a stud 16. The recess 14 is a through hole. For instance, the stud 16 comprises a shank 26 and a head 27. The shank 26 is designed to be arranged in the recess 14 wherein the head 27 projects from the recess 14.

The housing 12 is made of plastic material, for instance thermoplastic. The housing 12 has a circular shape in a plane orthogonal to the longitudinal axis X. The housing 12 comprises a first surface and a second surface opposite the first surface. The housing 12 further comprises a slit 18 extending axially from the recess 14. The slit 18 extends on the first surface. For instance, the recess 14 is centred in the slit 18. And the slit extends through the first surface. The slit 18 is formed by two tracks 28, 30. The two tracks 28, 30 face each other and each comprises a first segment 32, a second segment 34 and an interface segment 36 extending between the first and second segments 32, 34. The first segments 32 extend parallel to each other. The second segments 34 extend parallel to each other. The interface segments 36 are curved, such that the distance between the first segments 32 is greater than the distance between the second segments 34.

The tracks 28, 30 and the slit 18 are provided to guide the clamp 20. The tracks 28, 30 can also assume the function of reinforcing ribs to reinforce the housing and avoid deformation. Further reinforcement ribs may be provided on the first surface and/or on the second surface. For example, reinforcing ribs can be provided on the first surface extending perpendicular to the first and/or second tracks. On the second surface, the reinforcing rib can be opposite the slit in order to compensate the downward rigidity due to the slit 18.

The clamp 20 is adapted to seat in the slit 18 and to partially cover the recess 14. The clamp 20 comprises a first portion 38 extending in a first plane, the first portion being adapted to be inserted in the slit 18 and a second portion 40 extending in a second plane, the second portion 40 being adapted to stay outside of the slit 18. The second portion 40 extends sensibly orthogonal from the first portion 38. The first portion comprises an aperture 22 axially opened (or notch). The aperture 22 is adapted to receive a portion of the stud, and more particularly the shaft or shank 26 of the stud. The walls defining the aperture 22 are adapted to form an abutment for the head 27 of the stud, such that the clamp 20 can retain the stud 16. For instance, the first portion 38 of the clamp 20 comprises two curved free ends 42. The axially opened aperture 22 is provided between the two curved free ends 42. The two curved free ends 42 cooperate with the interface segments 36 of the clamp 20. The interface segments 36 form an abutment for the clamp 20. The clamp is for example made of metal material such as aluminium or steel.

The clamp 20 is movable between a clamped position, in which the stud 16 is retained by the clamp 20 and a free position. The clamped position can be secured by a protrusion 44 and opening 24 locking. More particularly, the clamp 20 can comprise the opening 24. The opening 24 is arranged on the first portion of the clamp between the aperture 22 and the second portion. The aperture 22 and the opening 24 are distant from each other from at least 2 millimetres. The opening 24 cooperates with a protrusion arranged in the slit. In the clamped position, protrusion and opening cooperate together in order to secure the clamping. In the free position, protrusion and opening do not cooperate together.

The assembly of the fastening element 10 can be done as follow. The housing 12 is arranged above the stud 16 and moved toward the stud 16 such that the shank 26 of the stud is received in the recess. The clamp 20 is then inserted in the slit. The free ends of the clamp are first guided through the first segments until the aperture catches the shank 26, the head resting against the first portion area forming the circumference of the aperture. The fastening element 10 is provided notably for the attachment of an actuator to the front flap of a vehicle.

## Claims

1. Fastening element (10) for the attachment of an actuator to the front flap of a vehicle, having:
- a housing (12) comprising a recess (14) extending along a longitudinal axis (X) and adapted to receive a stud, and a slit (18) extending radially from the recess (14), and
- a clamp (20) adapted to cooperate with the slit (18), wherein the clamp (20) partially covers the recess,
wherein the clamp comprises a first portion extending in a first plane, the first portion being adapted to be inserted in the slit (18) and a second portion extending in a second plane, the second portion being adapted to stay outside of the slit, wherein the second portion extends sensibly orthogonal from the first portion, and wherein the first portion comprises an aperture (22) axially opened and adapted to receive a stud.

2. Fastening element (10) according to claim 1 or 2, wherein the first portion of the clamp comprises an opening (24), the housing (12) comprises a protrusion, and the protrusion is adapted to extend in the opening.

3. Fastening element (10) according to claim 2, wherein the opening (24) is provided on the first portion and extends between the second portion and the aperture (22).

4. Fastening element (10) according to claim 2 or 3, wherein the clamp (20) is movable with regard to the housing (12) between a free position, in which the protrusion does not cooperate with the opening (24) and a clamped position, in which the protrusion cooperates with the opening (24).

5. Fastening element (10) according to claim 4, wherein the aperture (22) and the opening (24) are distant from each other from at least 2 millimetres.

6. Fastening element (10) according to any of claims 1 to 5, wherein the first portion of the clamp (20) comprises two curved free ends.

7. Fastening element (10) according to claim 6, wherein the axially opened aperture (22) is provided between the two curved free ends.

8. Fastening element (10) according to any of the preceding claims, wherein the slit of the housing is formed by two tracks.

9. Fastening element (10) according to claim 8, wherein the two tracks each have a first segment, a second segment and an interface segment extending between the first and second segments.

10. Fastening element (10) according to claim 9, wherein the first segments and/or the second segments extend parallel from each other.

11. Fastening element (10) according to claim 6 and claim 8 or 9, wherein the interface segments are curved and cooperate with the free curved ends.

12. Fastening element (10) according to any of the preceding claims, wherein the clamp is made of a metallic material.

13. Fastening element (10) according to any of the preceding claims, wherein the housing is made of a plastic material.

14. System for the attachment of an actuator to the front flap of a vehicle, comprising
- a first component provided with a stud having a shaft and a head,
- a second component provided with the fastening element (10) according to any of claims 1 to 13,
wherein the shaft is received within the recess, and wherein the stud cooperates with the clamp and the clamp retains the head of the stud.

## Patentansprüche

1. Befestigungselement (10) für die Befestigung eines Bedienungselements an der Vorderklappe eines Fahrzeugs, aufweisend:
- ein Gehäuse (12), das eine Aussparung (14), die sich entlang einer Längsachse (X) erstreckt und ausgebildet ist, einen Bolzen aufzunehmen, und einen Schlitz (18), der sich radial von der Aussparung (14) erstreckt, umfasst, und
- eine Klemme (20), die ausgebildet ist, mit dem Schlitz (18) zusammenzuwirken, wobei die Klemme (20) die Aussparung teilweise bedeckt,
wobei die Klemme einen ersten Abschnitt, der sich in einer ersten Ebene erstreckt, wobei der erste Abschnitt ausgebildet ist, in den Schlitz (18) eingesetzt zu werden, und einen zweiten Abschnitt, der sich in einer zweiten Ebene erstreckt, umfasst, wobei der zweite Abschnitt ausgebildet ist, außerhalb des Schlitzes zu bleiben, wobei der zweite Abschnitt sich merklich orthogonal vom ersten Abschnitt erstreckt und wobei der erste Abschnitt eine Apertur (22) umfasst, die axial geöffnet und ausgebildet ist, einen Bolzen aufzunehmen.

2. Befestigungselement (10) nach Anspruch 1, wobei der erste Abschnitt der Klemme eine Öffnung (24) umfasst, das Gehäuse (12) einen Fortsatz umfasst und der Fortsatz ausgebildet ist, sich in die Öffnung zu erstrecken.

3. Befestigungselement (10) nach Anspruch 2, wobei die Öffnung (24) an dem ersten Abschnitt bereitgestellt ist und sich zwischen dem zweiten Abschnitt und der Apertur (22) erstreckt.

4. Befestigungselement (10) nach Anspruch 2 oder 3, wobei die Klemme (20) in Bezug auf das Gehäuse (12) zwischen einer freien Position, in der der Fortsatz mit der Öffnung (24) nicht zusammenwirkt, und einer festgeklemmten Position, in der der Fortsatz mit der Öffnung (24) zusammenwirkt, beweglich ist.

5. Befestigungselement (10) nach Anspruch 4, wobei die Apertur (22) und die Öffnung (24) zumindest 2 Millimeter voneinander entfernt sind.

6. Befestigungselement (10) nach einem der Ansprüche 1 bis 5, wobei der erste Abschnitt der Klemme (20) zwei gekrümmte freie Enden umfasst.

7. Befestigungselement (10) nach Anspruch 6, wobei die axial geöffnete Apertur (22) zwischen den zwei gekrümmten freien Enden bereitgestellt ist.

8. Befestigungselement (10) nach einem der vorstehenden Ansprüche, wobei der Schlitz des Gehäuses durch zwei Spuren gebildet ist.

9. Befestigungselement (10) nach Anspruch 8, wobei die zwei Spuren jeweils ein erstes Segment, ein zweites Segment und ein Schnittstellensegment aufweisen, das sich zwischen dem ersten und zweiten Segment erstreckt.

10. Befestigungselement (10) nach Anspruch 9, wobei die ersten Segmente und/oder die zweiten Segmente sich parallel zueinander erstrecken.

11. Befestigungselement (10) nach Anspruch 6 und Anspruch 8 oder 9, wobei die Schnittstellensegmente gekrümmt sind und mit den freien gekrümmten Enden zusammenwirken.

12. Befestigungselement (10) nach einem der vorstehenden Ansprüche, wobei die Klemme aus einem metallischen Material besteht.

13. Befestigungselement (10) nach einem der vorstehenden Ansprüche, wobei das Gehäuse aus einem Kunststoffmaterial besteht.

14. System für die Befestigung eines Bedienungselements an der Vorderklappe eines Fahrzeugs, umfassend
- eine erste Komponente, die mit einem Bolzen mit einem Schaft und einem Kopf bereitgestellt ist,
- eine zweite Komponente, die mit dem Befestigungselement (10) nach einem der Ansprüche 1 bis 13 bereitgestellt ist,
wobei der Schaft innerhalb der Aussparung aufgenommen ist und wobei der Bolzen mit der Klemme zusammenwirkt und die Klemme den Kopf des Bolzens hält.

## Revendications

1. Élément de fixation (10) pour la fixation d'un actionneur sur le capot avant d'un véhicule, présentant :
- un boîtier (12) comprenant un évidement (14) s'étendant le long d'un axe longitudinal (X) et adapté pour recevoir un goujon, et une fente (18) s'étendant radialement à partir de l'évidement (14), et
- une pince (20) adaptée pour coopérer avec la fente (18), dans lequel la pince (20) recouvre partiellement l'évidement,
dans lequel la pince comprend une première partie s'étendant dans un premier plan, la première partie étant adaptée pour être insérée dans la fente (18) et une seconde partie s'étendant dans un second plan, la seconde partie étant adaptée pour rester à l'extérieur de la fente, dans lequel la seconde partie s'étend sensiblement orthogonalement par rapport à la première partie, et dans lequel la première partie comprend une ouverture (22) ouverte axialement et adaptée pour recevoir un goujon.

2. Elément de fixation (10) selon la revendication 1, dans lequel la première partie de la pince comprend une ouverture (24), le boîtier (12) comprend une saillie et la saillie est adaptée pour s'étendre dans l'ouverture.

3. Elément de fixation (10) selon la revendication 2, dans lequel l'ouverture (24) est prévue sur la première partie et s'étend entre la seconde partie et l'ouverture (22).

4. Elément de fixation (10) selon la revendication 2 ou 3, dans lequel la pince (20) est mobile par rapport au boîtier (12) entre une position libre, dans laquelle la saillie ne coopère pas avec l'ouverture (24), et une position serrée, dans laquelle la saillie coopère avec l'ouverture (24).

5. Elément de fixation (10) selon la revendication 4, dans lequel l'ouverture (22) et l'ouverture (24) sont distantes l'une de l'autre d'au moins 2 millimètres.

6. Elément de fixation (10) selon l'une quelconque des revendications 1 à 5, dans lequel la première partie de la pince (20) comprend deux extrémités libres incurvées.

7. Elément de fixation (10) selon la revendication 6, dans lequel l'ouverture ouverte axialement (22) est prévue entre les deux extrémités libres incurvées.

8. Elément de fixation (10) selon l'une quelconque des revendications précédentes, dans lequel la fente du boîtier est formée par deux pistes.

9. Elément de fixation (10) selon la revendication 8, dans lequel les deux pistes ont chacune un premier segment, un second segment et un segment d'interface s'étendant entre les premier et second segments.

10. Elément de fixation (10) selon la revendication 9, dans lequel les premiers segments et/ou les seconds segments s'étendent parallèlement les uns aux autres.

11. Elément de fixation (10) selon la revendication 6 et la revendication 8 ou 9, dans lequel les segments d'interface sont incurvés et coopèrent avec les extrémités incurvées libres.

12. Elément de fixation (10) selon l'une quelconque des revendications précédentes, dans lequel la pince est réalisée en un matériau métallique.

13. Elément de fixation (10) selon l'une quelconque des revendications précédentes, dans lequel le boîtier est réalisé en matière plastique.

14. Système de fixation d'un actionneur sur le capot avant d'un véhicule, comprenant
- un premier composant muni d'un goujon présentant une tige et une tête,
- un second composant pourvu de l'élément de fixation (10) selon l'une quelconque des revendications 1 à 13,
dans lequel la tige est reçue dans l'évidement, et dans lequel le goujon coopère avec la pince et la pince maintient la tête du goujon.
